# EUROPEAN PATENT APPLICATION

(11) **EP 4 800 873 A1**
(43) Date of publication of application: **02.09.2026**
(21) Application number: 23959905.3
(22) Date of filing: 30.11.2023
(51) Int. Cl.: H02J 7/00

(54) **WIRELESS CHARGING MODULE, WIRELESS CHARGING DEVICE AND WIRELESS CHARGING SYSTEM**

(71) Applicant: Huawei Technologies Co., Ltd., Shenzhen, Guangdong 518129 (CN)
(72) Inventor: WANG, Chao, Shenzhen, Guangdong 518129 (CN); LI, Yuechao, Shenzhen, Guangdong 518129 (CN); WANG, Yong, Shenzhen, Guangdong 518129 (CN); CHEN, Gang, Shenzhen, Guangdong 518129 (CN); FU, Yiyuan, Shenzhen, Guangdong 518129 (CN)
(74) Representative: Thun, Clemens
(86) International application number: PCT/CN2023/135680
(87) International publication number: WO 2025/111994

(57) **Abstract**

An embodiment of this application provides a wireless charging module, including a multi-wire parallel wound coil 501, where the multi-wire parallel wound coil 501 is formed by winding multiple wires side by side, a target structure 502 is connected between at least two wires in the multi-wire parallel wound coil 501, the target structure 502 is equivalent to a negatively coupled inductor, and the target structure 502 is a structure formed by local structures of the two wires or a structure independent of the two wires. In this application, a negatively coupled inductor may be connected in an inter-wire loop of the multi-wire parallel wound coil 501, to increase a loop impedance, thereby suppressing a loop current, and resolving problems of an additional loss and uneven heat distribution caused by presence of the loop current in the multi-wire parallel wound coil 501.

## Description

### TECHNICAL FIELD

Embodiments of this application relate to the electronic device field and the wireless charging field, and more specifically, to a wireless charging module, a wireless charging device, and a wireless charging system.

### BACKGROUND

A wireless charging receiving device may be disposed close to a wireless charging transmitting device, to form a wireless charging system. The wireless charging transmitting device may transmit a varying magnetic field by using a transmitting coil. A receiving coil of the wireless charging receiving device may be coupled to the transmitting coil of the wireless charging transmitting device, so that the wireless charging receiving device may receive the varying magnetic field from the wireless charging transmitting device by using the receiving coil. The varying magnetic field transmitted by the transmitting coil may enable the receiving coil to generate an induced current, so that the wireless charging receiving device can obtain electrical energy from the wireless charging transmitting device.

In the wireless charging system, a multi-wire/bundle/strand parallel wound coil is used, so that a currentcarrying capability of the coil can be flexibly increased, thereby adapting to different application requirements. However, due to influence of a skin effect and a proximity effect under high-frequency operating conditions, values of currents in parallel wound wires are different, causing a Q value of the coil to be lower than that of a single-wire wound coil of the same size. This is not conducive to improving system efficiency.

### SUMMARY

According to a first aspect, this application provides a wireless charging module, including a multi-wire parallel wound coil 501, where the multi-wire parallel wound coil 501 is formed by winding multiple wires side by side, where a target structure 502 is connected between at least two wires in the multi-wire parallel wound coil 501, the target structure 502 is equivalent to a negatively coupled inductor, and the target structure 502 is a structure formed by local structures of the two wires or a structure independent of the two wires.

In an embodiment of this application, a negatively coupled inductor may be connected in an inter-wire loop of the multi-wire parallel wound coil 501, to increase a loop impedance, thereby suppressing a loop current, and resolving problems of an additional loss and uneven heat distribution caused by presence of the loop current in the multi-wire parallel wound coil 501.

The wires may be wound to form sub-coils.

In a possible implementation, the target structure 502 is connected between each wire and at least one other wire in the multi-wire parallel wound coil 501.

When the negatively coupled inductor has a sufficiently large inductance value, a good loop current suppression effect may be achieved by connecting at least one group of negatively coupled inductors between each wire and any other wire. In this case, only a minimum of N-1 groups of negatively coupled inductors are required, that is, there is no need to dispose a negatively coupled inductor between every two wires in the multi-wire parallel wound coil 501, thereby reducing costs.

In a possible implementation, the target structure 502 is connected between any two of the wires in the multi-wire parallel wound coil 501.

In a most ideal case, one group of negatively coupled inductors is connected between any two wires, and the N-wire parallel wound coil 501 requires a total of N·(N-1)/2 groups of negatively coupled inductors. In this case, the loop impedance can be maximized, and a better loop current suppression effect can be achieved.

In a possible implementation, the at least two wires include a first wire and a second wire; and the target structure 502 includes a magnetic ring 503, where lead-out ends on a same side of the first wire and the second wire are wound around the magnetic ring 503 in opposite winding directions.

In the foregoing manner, the added negatively coupled inductor may be formed by a lead-out wire of the coil 501 and the magnetic ring 503, and the lead-out wire of the coil 501 is reused as a negatively coupled inductor winding, so that a negatively coupled inductor with a high Q value can be implemented at a low cost.

In a possible implementation, the at least two wires include a first wire and a second wire; and the target structure 502 includes a circuit board substrate and a magnetic ring, where the circuit board substrate includes a first hole 1106, a second hole 1107, a first wire 1102 wound around the first hole 1106, and a second wire 1103 wound around the second hole 1107, the magnetic ring passes through the first hole 1106 and the second hole 1107, a lead-out end of the first wire is connected to the first wire 1102, and a lead-out end of the second wire is connected to the second wire 1103.

In a possible implementation, the multi-wire parallel wound coil 501 is attached to a magnetic core, where the magnetic ring includes a first magnetic core part 1104 and a C-shaped second magnetic core part 1105 or an E-shaped second magnetic core part 1105, the first magnetic core part 1104 belongs to the magnetic core, and the second magnetic core part 1105 is snapped onto the first magnetic core part 1104 and passes through the first hole 1106 and the second hole 1107.

In a possible implementation, the at least two wires include a first wire and a second wire; and the target structure 502 includes a circuit board substrate 1101, a first magnetic core part 1104, and an E-shaped second magnetic core part 1105, where
the circuit board substrate includes a third hole 1108, a first wire 1102 wound around the third hole 1108, and a second wire 1103, where the first wire 1102 and the second wire 1103 are at different layers of the circuit board substrate 1101, a middle protrusion of the second magnetic core part 1105 passes through the third hole 1108, a lead-out end of the first wire is connected to the first wire 1102, a lead-out end of the second wire is connected to the second wire 1103, the first magnetic core part 1104 belongs to the magnetic core, and the second magnetic core part 1105 is snapped onto the first magnetic core part 1104 and passes through the third hole 1108.

In a possible implementation, the circuit board substrate further includes a fourth hole 1109 and a fifth hole 1110, and protrusions on two sides of the second magnetic core part 1105 respectively pass through the fourth hole 1109 and the fifth hole 1110.

In a possible implementation, protrusions on two sides of the second magnetic core part 1105 pass through two sides of the circuit board substrate and snap onto the first magnetic core part 1104.

The first magnetic core part 1104 and the second magnetic core part 1105 may be, but are not limited to, a C-shaped core combined with an I-shaped core, a C-shaped core combined with a C-shaped core, an E-shaped core combined with an I-shaped core, an E-shaped core combined with an E-shaped core, or a pot-shaped core. When a magnetic core such as an E-shaped core or a pot-shaped core is used, the first wire 1102 and the second wire 1103 may be wound around a same hole.

To reduce costs, a magnetic core is provided on the back of the coil, and a magnetic core is also required for the negatively coupled inductor. Therefore, magnetic core of the coil and the negatively coupled inductor may be partially reused to improve overall integration and reduce a volume and costs. Therefore, the used magnetic ring may include the first magnetic core part 1104 and the C-shaped or E-shaped second magnetic core part 1105. For example, the first magnetic core part 1104 may be I-shaped, the first magnetic core part 1104 belongs to the magnetic core, and the second magnetic core part 1105 is snapped onto the first magnetic core part 1104 and passes through the first hole 1106 and the second hole 1107.

In a possible implementation, the second magnetic core part 1105 and the multi-wire parallel wound coil 501 are located on opposite sides of the magnetic core.

In other words, the target structure 502 equivalent to the negatively coupled inductor may also be disposed on the back of the magnetic core of the coil, so that an overall structure can be more compact.

In a possible implementation, the at least two wires include a first wire and a second wire; and the multi-wire parallel wound coil 501 is attached to a magnetic core, where the target structure 502 is formed by using the following structure: the magnetic core is provided with a through hole 1301 at lead-out ends of the first wire and the second wire, the lead-out end of the first wire passes through the through hole 1301, and the lead-out end of the second wire does not pass through the through hole 1301; or the magnetic core is provided with a plurality of through holes 1301 at lead-out ends of the first wire and the second wire, and the lead-out end of the first wire and the lead-out end of the second wire respectively pass through the plurality of through holes 1301 sequentially in opposite directions.

When the magnetic core exists on the back of the coil and there is sufficient space, the negatively coupled inductor may be formed by winding the lead-out wire of the coil through a rear magnetic core slot. The added negatively coupled inductor may be directly constructed based on a coil module and the rear magnetic core, thereby avoiding introduction of an additional component and helping reduce the costs and reduce the volume.

In a possible implementation, the at least two wires include a first wire and a second wire, the first wire includes a first wire segment 1401, the second wire includes a second wire segment 1402, the first wire segment 1401 and the second wire segment 1402 are adjacent and arranged side by side, and current directions on the first wire segment 1401 and the second wire segment 1402 are opposite. The opposite current directions herein may be understood as follows: Effective currents are in opposite directions, and loop currents are in a same direction.

For example, for a multi-wire parallel wound coil with a rear magnetic core, when there is sufficient space in the middle of the coil or on the back of the magnetic core, a negatively coupled inductor may be directly wound in the middle of the coil or on the back of the magnetic core, thereby avoiding introduction of an additional component and helping reduce the costs and reduce the volume.

In a possible implementation, the multi-wire parallel wound coil 501 is attached to a first magnetic core; and on the first magnetic core, an area in which the first wire segment 1401 and the second wire segment 1402 are located is covered with a second magnetic core 1501.

In other words, the negatively coupled inductor may be further covered with a magnetic core to increase an inductance value.

According to a second aspect, this application provides a wireless charging module, including a multi-wire parallel wound coil 501, where the multi-wire parallel wound coil 501 is formed by winding multiple wires side by side, where a capacitor is connected in series to each wire in the multi-wire parallel wound coil 501, a compensation inductor is connected in series to a main circuit formed after the multi-wire parallel wound coil 501 is connected, and a product of an inductance value of the compensation inductor and a total capacitance value of capacitors connected in series on the multi-wire parallel wound coil 501 is related to an operating frequency or a resonant compensation frequency of the coil.

When the operating frequency is fixed, the inductance value of the compensation inductor may be determined based on the operating frequency of the coil. When the operating frequency is not fixed, the inductance value of the compensation inductor may be determined based on the resonant compensation frequency of the coil.

In a possible implementation, capacitance values of the capacitors connected in series to different wires in the multi-wire parallel wound coil 501 are equal.

In a possible implementation, the product of the inductance value of the compensation inductor and the total capacitance value of the capacitors connected in series on the multi-wire parallel wound coil 501 is 1/(ω²), where ω is an operating frequency or a resonant compensation angular frequency.

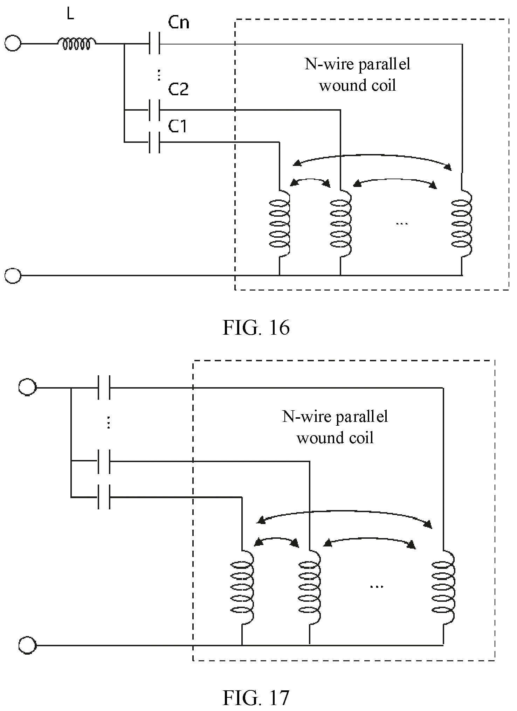

In an embodiment of this application, a loop current is suppressed by increasing a capacitive reactance of an inter-wire loop. As shown in FIG. 16, each wire of the multi-wire parallel wound coil is connected in series to a capacitor, so that a large capacitive reactance is introduced in any inter-wire loop, and an inter-wire loop current is reduced. Because the capacitors connected in series are also equivalent to a capacitor whose capacitance value is a total capacitance value C (C=C1+C2+...+Cn) connected in series in an effective current loop, to avoid or reduce impact on an impedance characteristic of the effective current loop, a compensation inductor L may be connected in series to the main circuit for compensation, and an inductance value of the compensation inductor and the total capacitance value of the capacitors connected in series satisfy L=1/(ω²·C). When the operating frequency is fixed, ω may be the operating angular frequency; or when the operating frequency is not fixed, ω may be the resonant compensation angular frequency of the coil.

In the foregoing manner, in the multi-wire parallel wound coil, a capacitor is connected in series to each wire to increase the capacitive reactance of the loop in the multi-wire parallel wound coil, and an inductor is connected in series to a main loop to offset impact of the series capacitors on an effective current. Because the capacitors have advantages of small volumes and low costs, and a loop current suppression capacitor may be reused with a series compensation capacitor, problems of a loop current loss and uneven heat distribution of the multi-wire parallel wound coil can be improved at extremely low costs in terms of volume and cost.

In a possible implementation, an inductor is connected between different wires.

In a possible implementation, inductors with a same inductance value are connected between different wires in the multi-wire parallel wound coil 501. To further enhance a suppression effect on the inter-wire loop current, in addition to connecting the capacitors in series to the wires, the inductors with the same inductance value may be connected between different wires, to construct an LC band-stop network.

According to a third aspect, this application provides a wireless charging module, including a multi-wire parallel wound coil 501, where the multi-wire parallel wound coil 501 is formed by winding multiple wires side by side, where an inductor is connected in series to each wire in the multi-wire parallel wound coil 501, a compensation capacitor is connected in series to a main circuit formed after the multi-wire parallel wound coil 501 is connected, and a value relationship between a capacitance value of the compensation capacitor and inductors connected in series on the multi-wire parallel wound coil 501 is related to an operating frequency or a resonant compensation frequency of the coil.

In a possible implementation, inductance values of the inductors connected in series to different wires in the multi-wire parallel wound coil 501 are equal.

In a possible implementation, the value relationship between the capacitance value of the compensation capacitor and the inductors connected in series on the multi-wire parallel wound coil 501 is: 1/L1+1/L2+...+1/Ln=(ω²·C), where ω is an operating frequency or a resonant compensation angular frequency, C is the capacitance value of the compensation capacitor, and · is multiplication.

In a possible implementation, a capacitor is connected between different wires.

In a possible implementation, capacitors with a same capacitance value are connected between different wires in the multi-wire parallel wound coil 501. To further enhance a suppression effect on an inter-wire loop current, in addition to connecting the inductors in series to the wires, the capacitors with the same capacitance value may be connected between different wires, to construct an LC band-stop network.

According to a fourth aspect, this application provides a wireless charging device, including the wireless charging module according to any one of the first aspect, the second aspect, or the third aspect and an energy storage device, where the wireless charging module is configured to serve as a wireless charging receive end; and the multi-wire parallel wound coil 501 included in the wireless charging module is configured to receive electrical energy, and transmit the electrical energy to the energy storage device.

According to a fifth aspect, this application provides a wireless charging device, including the wireless charging module according to any one of the first aspect, the second aspect, or the third aspect and an energy storage device, where the wireless charging module is configured to serve as a wireless charging transmit end; and the multi-wire parallel wound coil 501 included in the wireless charging module is configured to propagate electrical energy from the energy storage device to an externally coupled coil by using a magnetic field.

According to a sixth aspect, this application provides a charging system, including the wireless charging device according to the fourth aspect and the wireless charging device according to the fifth aspect.

### BRIEF DESCRIPTION OF DRAWINGS

FIG. 1 is a diagram illustrating a wireless charging system to which this application is applicable;
FIG. 2A to FIG. 2D are diagrams illustrating several wireless reverse charging scenarios according to an embodiment of this application;
FIG. 3 is a diagram illustrating another wireless charging system according to an embodiment of this application;
FIG. 4 is a diagram illustrating a wireless charging principle;
FIG. 5 is a diagram illustrating a principle of suppressing a loop current in a two-wire parallel wound coil 501 by using an inductor-capacitor network;
FIG. 6 illustrates a negatively coupled inductor equivalent to a target structure;
FIG. 7 illustrates a three-wire parallel wound coil 501 connected to three groups of negatively coupled inductors;
FIG. 8 illustrates a three-wire parallel wound coil 501 connected to two groups of negatively coupled inductors;
FIG. 9 illustrates a two-wire parallel wound coil 501;
FIG. 10 illustrates a two-wire parallel wound coil 501;
FIG. 11 illustrates a target structure 502;
FIG. 12A illustrates a first magnetic core part 1104 that reuses a magnetic core on the back of a coil;
FIG. 12B illustrates a first magnetic core part 1104 that reuses a magnetic core on the back of a coil;
FIG. 12C illustrates a first magnetic core part 1104 that reuses a magnetic core on the back of a coil;
FIG. 13 illustrates that a magnetic ring may be implemented by digging a hole in a magnetic core on the back of a coil;
FIG. 14 is a diagram of a structure in which a negatively coupled inductor is directly wound in the middle of a two-wire parallel wound coil;
FIG. 15 is a diagram of a structure in which a negatively coupled inductor wound on a surface of a magnetic core is covered with a magnetic core to increase an inductance value of the negatively coupled inductor;
FIG. 16 illustrates that a capacitor is connected in series to each wire of a multi-wire parallel wound coil;
FIG. 17 is a circuit diagram illustrating a principle of suppressing an inter-wire loop current by connecting capacitors in series to an N-wire parallel wound coil when a total capacitance value of loop current suppression capacitors is equal to a capacitance value of a compensation capacitor;
FIG. 18 is a circuit diagram illustrating a principle of suppressing an inter-wire loop current by using an LC band-stop network; and
FIG. 19 is a circuit diagram illustrating a principle of suppressing an inter-wire loop current by using an LC band-stop network.

### DESCRIPTION OF EMBODIMENTS

The following describes technical solutions of embodiments in this application with reference to accompanying drawings.

It should be noted that, in descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists.

The terms "first" and "second" in embodiments of this application are merely intended for a purpose of description, and shall not be understood as an indication or implication of relative importance or implicit indication of a quantity of indicated technical features. Therefore, a feature defined by "first" or "second" may explicitly or implicitly include one or more features. In addition, in the descriptions of embodiments of this application, "a plurality of" means two or more, and "at least one" and "one or more" mean one, two, or more. Singular expression forms "one", "a", "the", "the foregoing", "this", and "the one" are also intended to include expression forms such as "one or more", unless otherwise specified in the context clearly.

Reference to "an embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily refer to a same embodiment, but mean "one or more but not all embodiments", unless otherwise specifically emphasized in another manner. The terms "include", "have", and their variants all mean "include but are not limited to", unless otherwise specifically emphasized in another manner.

In the descriptions of embodiments of this application, orientations or location relationships indicated by terms such as "up", "down", "left", "right", "inner", "outer", "vertical", and "horizontal" are defined relative to orientations or locations of components schematically placed in the accompanying drawings. It should be understood that these orientation terms are relative concepts, and are used for relative description and clarification, instead of indicating or implying that specified apparatuses or components need to have specific orientations or are constructed and operated in specific orientations. The terms may vary correspondingly based on changes of the orientations of the components placed in the accompanying drawings, and therefore shall not be understood as a limitation on this application. In addition, "vertical" in this application is not strictly vertical, but within an allowable error range. "Parallel" is not strictly parallel, but within an allowable error range.

In embodiments of this application, same reference numerals indicate same components or parts. For same components or parts in embodiments of this application, only one component or part may be marked with a reference numeral in the figure as an example. It should be understood that, this is also applicable to reference numerals of other same components or parts. In addition, the components or parts in the accompanying drawings are not drawn to actual scale. Dimensions and sizes of the components or parts shown in the figures are merely examples, and should not be understood as a limitation on this application.

For ease of understanding, the following first explains and describes technical terms in this application.

Wireless charging refers to a technology in which an apparatus uses an energy form such as an electromagnetic field, an electromagnetic wave, a mechanical wave, light, or heat as a bridge for transmitting electrical energy without using a conducting wire, and uses corresponding devices at a transmit end and a receive end to send and receive corresponding energy for charging.

A magnet is a substance or material that can generate a magnetic field, or is a magnetic object. A magnet has two polarities. Any magnet has two magnetic poles: a magnetic north pole N (also referred to as an N pole) and a magnetic south pole S (also referred to as an S pole). Magnetic strength of different parts of the magnet varies, and a magnetic pole is a part with greatest magnetic strength on the magnet. Magnetic poles interact with each other. Same magnetic poles repel each other, and different magnetic poles attract each other. Magnets are generally classified into permanent magnets and soft magnets.

A permanent magnet is a magnet that can maintain magnetism for a long time. The permanent magnet is a hard magnet, which is difficult to demagnetize and difficult to magnetize.

A permanent magnetic material is a material that is difficult to magnetize and, once magnetized, is also difficult to demagnetize. A main characteristic of the permanent magnetic material is that the permanent magnetic material has high coercivity (usually greater than 1000 amperes per meter (A/m)).

A soft magnet is a magnet that is easy to magnetize, and whose magnetism easily disappears after the magnet is magnetized and cannot be maintained for a long time.

A soft magnetic material is a magnetic material having low coercivity (less than 1000 A/m, and usually less than 100 A/m) and high magnetic permeability. A main characteristic of the soft magnetic material is that the soft magnetic material is easy to magnetize and also easy to demagnetize and can achieve highest magnetization based on a smallest external magnetic field.

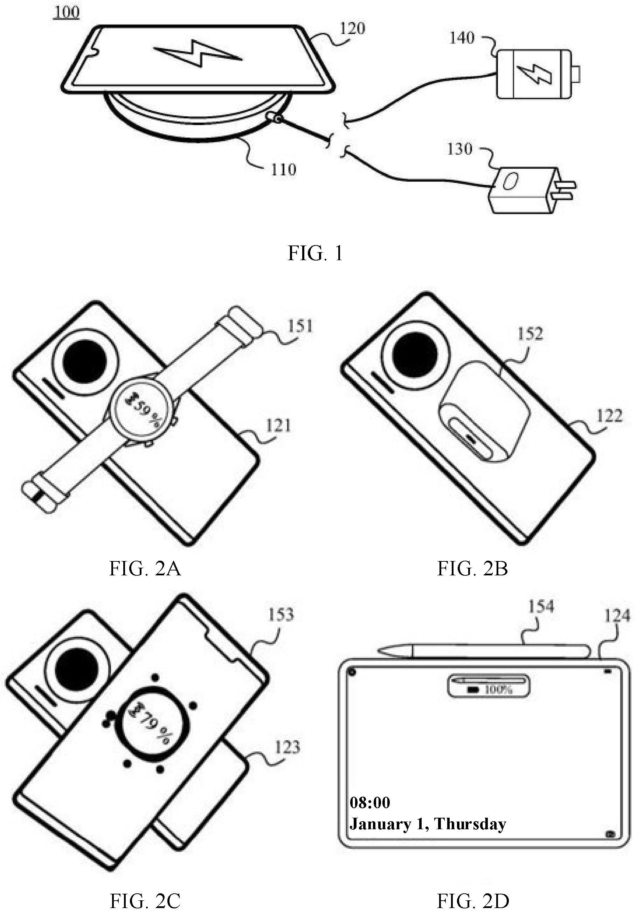

FIG. 1 is a diagram illustrating a wireless charging system to which this application is applicable.

As shown in FIG. 1, the wireless charging system 100 may include a wireless charging transmitting device 110 and a wireless charging receiving device 120. Energy may be transferred between the wireless charging transmitting device 110 and the wireless charging receiving device 120 in an energy coupling manner. More specifically, the wireless charging transmitting device 110 is used as an energy source, and may charge the wireless charging receiving device 120 by using an electromagnetic induction principle.

In some embodiments, the wireless charging transmitting device 110 used as a power supply device may also be referred to as a transmit end, and the wireless charging receiving device 120 used as a power receiving device may also be referred to as a receive end.

In embodiments of this application, the wireless charging transmitting device 110 or the wireless charging receiving device 120 may be a device having a wireless charging function, for example, a smartphone, a smartwatch, a smart band, a stylus, an earbud, a charging case, a tablet computer, an e-reader, a notebook computer, a camera, a vehicle-mounted device, a wireless charger, a mobile charger (which may also be referred to as a mobile power supply or a mobile power bank), a wearable device (for example, smart glasses or smart jewelry), a virtual reality (virtual reality, VR) terminal device, an augmented reality (augmented reality, AR) terminal device, a smart home device (for example, a smart screen or a smart television), or a vehicle.

By way of example, and not limitation, the wireless charging transmitting device 110 is a charging cradle, and the wireless charging receiving device 120 is a mobile phone; or the wireless charging transmitting device 110 is a charging case, and the wireless charging receiving device 120 is a wireless earbud; or the wireless charging transmitting device 110 is a smartphone, and the wireless charging receiving device 120 is a smartwatch; or the wireless charging transmitting device 110 is a vehicle, and the wireless charging receiving device 120 is a portable electronic device, for example, a mobile phone or a tablet computer.

In some embodiments, the wireless charging system 100 may further include a charger 130, and the charger 130 is connected to the wireless charging transmitting device 110. The charger 130 may be configured to receive mains power, convert the mains power into direct current power, and output the direct current power to the wireless charging transmitting device 110. Alternatively, the charger 130 may be configured to directly output received alternating current mains power to the wireless charging transmitting device 110. The wireless charging transmitting device 110 is configured to convert received electrical energy into electromagnetic field energy, and transmit the electromagnetic field energy to the outside. The wireless charging receiving device 120 is configured to receive electromagnetic field energy, and convert the electromagnetic field energy into electrical energy, to implement wireless charging.

In some embodiments, the wireless charging system 100 may further include an energy apparatus 140, for example, a battery. The wireless charging transmitting device 110 may be directly connected to the energy apparatus 140, to receive, as an input, direct current power or alternating current power provided by the energy apparatus 140.

In some embodiments, the wireless charging receiving device 120 may also be used as an energy source to charge another device that supports wireless charging. For example, a mobile phone having a wireless charging function may charge a device that supports wireless charging, for example, an earbud, a watch, or another mobile phone. In other words, the wireless charging receiving device 120 may receive electrical energy provided by the wireless charging transmitting device 110, and may also be used as a wireless charging transmitting device to charge another wireless charging receiving device, that is, support a wireless reverse charging function. Different from a power supply manner of a wireless charging cradle, energy for wireless reverse charging mainly depends on a device battery, and charging power is relatively low.

It should be noted that "a device has a wireless charging function" or a similar description thereof in this application may be understood as follows: The device has a capability of transmitting power to another device in a wireless manner, and/or the device has a capability of receiving, in the wireless manner, power transmitted by another device. In other words, the device may be a transmit end, or may be a receive end.

It should be noted that "a device has a wireless reverse charging function" or a similar description thereof in this application may be understood as follows: The device has a capability of receiving, in the wireless manner, power transmitted by another device and a capability of transmitting power to another device in the wireless manner.

FIG. 2A to FIG. 2D are diagrams illustrating several wireless reverse charging scenarios according to an embodiment of this application. It may be understood that a specific form of a wireless reverse charging scenario is not limited in embodiments of this application. The wireless reverse charging scenarios described in FIG. 2A to FIG. 2D are merely several examples provided for ease of understanding.

As shown in FIG. 2A, a wireless reverse charging scenario may include a mobile phone 121 and a watch 151. The mobile phone 121 may be used as a receive end to receive electrical energy in a wireless charging process. In addition, the mobile phone 121 may be used as a transmit end to perform wireless reverse charging on the watch 151 after a wireless reverse charging function is enabled. In this case, the watch 151 is a receive end in a wireless reverse charging process.

As shown in FIG. 2B, a wireless reverse charging scenario may include a mobile phone 122 and an earbud charging case 152. The mobile phone 122 may be used as a receive end to receive electrical energy in a wireless charging process. In addition, the mobile phone 122 may be used as a transmit end to perform wireless reverse charging on the earbud charging case 152 after a wireless reverse charging function is enabled. In this case, the earbud charging case 152 is a receive end in a wireless reverse charging process.

As shown in FIG. 2C, a wireless reverse charging scenario may include a first mobile phone 123 and a second mobile phone 153. The first mobile phone 123 may be used as a receive end to receive electrical energy in a wireless charging process. In addition, the first mobile phone 123 may be used as a transmit end to perform wireless reverse charging on the second mobile phone 153 after a wireless reverse charging function is enabled. In this case, the second mobile phone 153 is a receive end in a wireless reverse charging process.

As shown in FIG. 2D, a wireless reverse charging scenario may include a tablet computer 124 and a stylus 154. The tablet computer 124 may be used as a receive end to receive electrical energy in a wireless charging process. In addition, the tablet computer 124 may be used as a transmit end to perform wireless reverse charging on the stylus 154 after a wireless reverse charging function is enabled. In this case, the stylus 154 is a receive end in a wireless reverse charging process.

In FIG. 2A to FIG. 2D, the watch 151, the earbud charging case 152, the second mobile phone 153, and the stylus 154 may not have the wireless reverse charging function, or temporarily do not enable the wireless reverse charging function.

It should be understood that a specific type of a device in a wireless reverse charging scenario is not limited in embodiments of this application. For example, a power supply device (that is, an electronic device that enables a wireless reverse charging function and wirelessly charges another device) may be a portable electronic device such as a mobile phone, a tablet computer, or a notebook computer. A power receiving device (that is, an electronic device that is wirelessly charged by a power supply device) may be a portable electronic device such as a mobile phone, a band, a watch, an earbud, a keyboard, a stylus, or an electric toothbrush.

In addition, it may be understood that the wireless reverse charging scenario is one of wireless charging scenarios. Correspondingly, FIG. 2A to FIG. 2D are actually specific examples of the wireless charging system 100. The mobile phone 121, the mobile phone 122, the first mobile phone 123, and the tablet computer 124 are specific examples of the wireless charging transmitting device 110 shown in FIG. 1. The watch 151, the earbud charging case 152, the second mobile phone 153, and the stylus 154 are specific examples of the wireless charging receiving device 120 shown in FIG. 1.

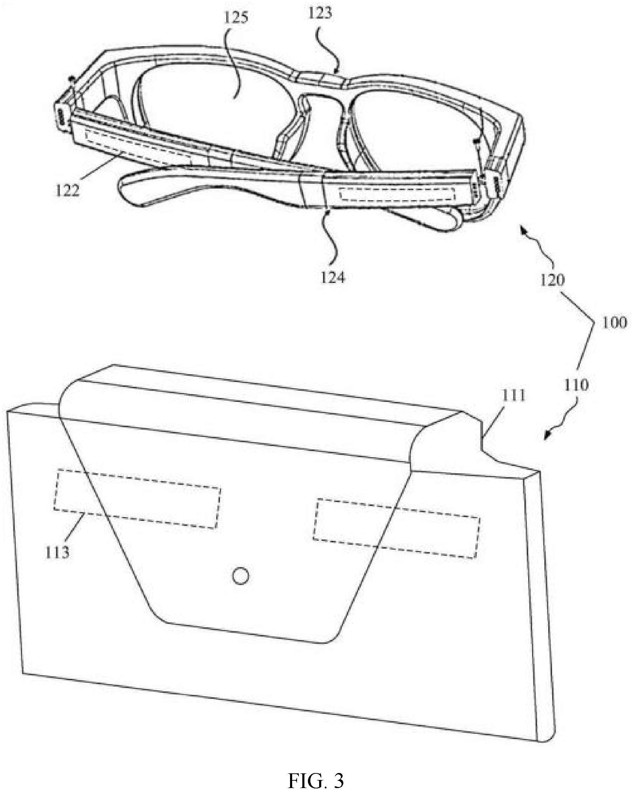

FIG. 3 shows another wireless charging system 100 according to an embodiment of this application. In the embodiment shown in FIG. 3, an example in which a wireless charging transmitting device 110 is a glasses case and a wireless charging receiving device 120 is smart glasses is used for description.

The wireless charging transmitting device 110 may include a housing 111 and a wireless charging module 113. The wireless charging module 113 may be fastened to the housing 111, for example, fastened to an inner wall of the housing 111. The housing 111 may be further configured to accommodate glasses, for example, the wireless charging receiving device 120 shown in FIG. 3.

The wireless charging receiving device 120 may include a frame 123, a temple 124, and a lens 125. There may be one or more temples 124. In the embodiment shown in FIG. 3, there may be a plurality of temples 124. The lens 125 is fastened to the frame 123.

One end of the temple 124 may be rotatably connected to one end of the frame 123 through a connecting shaft, so that the temple 124 can switch between an unfolded state and a folded state. In some embodiments, one end of the temple 124 may be detachably connected to one end of the frame 123 through the connecting shaft. When the temple 124 is in the unfolded state, the temple 124 can be worn on an ear of a user. FIG. 3 is a diagram in which the temple 124 is in the folded state. When the temple 124 is in the folded state, the temple 124 is folded relative to the frame 123. In some embodiments, the temple 124 being in the folded state facilitates accommodation of the smart glasses 100 in the glasses case (for example, the wireless charging transmitting device 110 shown in FIG. 3, or a common glasses case).

An electronic component (not shown in the figure), for example, a mainboard, a wireless charging module 122, or a battery, may be disposed on the temple 124. A voice control module, a gesture recognition module, an eye tracking module, or the like may be disposed on the mainboard. As a power supply, the battery may supply electrical energy to the temple 124. The wireless charging module 122 may include a receiving coil, and the wireless charging module 122 may charge the battery by using the receiving coil. In some embodiments, the battery may be located at an end that is of the temple and that is away from the frame, and the wireless charging module 122 and the mainboard may be located at an end that is of the temple and that is close to the frame.

In some possible scenarios, the smart glasses may be augmented reality (augmented reality, AR) smart glasses. When the smart glasses are worn on a head of the user, the user may see an image displayed by a display unit (not shown in the figure) of the smart glasses. In other words, the user may not only view a scene of a real world through the smart glasses, but also observe an image of a virtual world through the smart glasses. In some embodiments, the user may further use the smart glasses, so that the smart glasses display a virtual image to enhance an observation effect of the real world. In some other possible scenarios, the smart glasses may not be limited to AR smart glasses, and the smart glasses may be other smart glasses, for example, VR smart glasses that achieve a virtual reality (virtual reality, VR) effect, smart glasses that achieve a mixed reality (mixed reality, MR) effect, or smart glasses that have an audio function.

With reference to the wireless charging systems 100 shown in FIG. 1, FIG. 2A to FIG. 2D, and FIG. 3, the following describes a principle of wireless charging from the wireless charging transmitting device 110 to the wireless charging receiving device 120.

In a process in which the wireless charging transmitting device 110 wirelessly charges the wireless charging receiving device 120, the wireless charging transmitting device 110 may be close to the wireless charging receiving device 120, so that a transmitting coil of the wireless charging transmitting device 110 may be coupled to a receiving coil of the wireless charging receiving device 120.

In the embodiment shown in FIG. 1, a magnetic component may be disposed near a frame of the wireless charging transmitting device 110. The magnetic component may be configured to attach the wireless charging receiving device 120 to the frame of the wireless charging transmitting device 110, so that the transmitting coil of the wireless charging transmitting device 110 can be stably coupled to the receiving coil of the wireless charging receiving device 120.

In the embodiment shown in FIG. 3, the wireless charging receiving device 120 may be folded and accommodated in an accommodating cavity of the wireless charging transmitting device 110. The wireless charging module 122 of the wireless charging receiving device 120 may be disposed close to the wireless charging module 113 of the wireless charging transmitting device 110, so that the transmitting coil of the wireless charging transmitting device 110 may be stably coupled to the receiving coil of the wireless charging receiving device 120.

The wireless charging module 113 may transmit a varying magnetic field by using the transmitting coil. A coil of the wireless charging module 122 may induce the magnetic field from the wireless charging module 113, and generate an induced current. The wireless charging module 122 may transfer the induced current generated by the coil to another component in the wireless charging receiving device 120, for example, the battery. In this scenario, a coil of the wireless charging transmitting device 110 may be a transmitting coil, and a coil of the wireless charging receiving device 120 may be a receiving coil.

In some embodiments, the wireless charging transmitting device 110 may alternatively be a wireless charging receiving device, that is, another device may wirelessly charge the wireless charging module 113. A coil of the wireless charging module 113 may induce a magnetic field from the another device, and generate an induced current. The wireless charging module 113 may transfer the induced current generated by the coil to another component in the wireless charging module 113. In this scenario, the coil of the wireless charging transmitting device 110 may be a receiving coil. In other words, the coil of the wireless charging transmitting device 110 may serve as both a transmitting coil and a receiving coil. For example, in the embodiment shown in FIG. 3, the glasses case may obtain electrical energy from a wireless charger by using the wireless charging module 113.

In some other embodiments, the wireless charging receiving device 120 may alternatively be a wireless charging transmitting device, that is, the wireless charging module 122 may wirelessly charge another device. The coil of the wireless charging module 122 may transmit a varying magnetic field, so that the wireless charging receiving device 120 may wirelessly charge the another device. In this scenario, the coil of the wireless charging receiving device 120 may be a transmitting coil. In other words, the coil of the wireless charging receiving device 120 may serve as both a receiving coil and a transmitting coil. For example, in the embodiment shown in FIG. 1, the stylus may wirelessly charge another device by using the wireless charging module 122. For another example, in the embodiment shown in FIG. 2A to FIG. 2D, the smart glasses may wirelessly charge another device by using the wireless charging module 12.

In some embodiments provided in this application, the coil may be a toroidal winding made by tightly winding a conducting wire. The conducting wire may be surrounded by an insulating material.

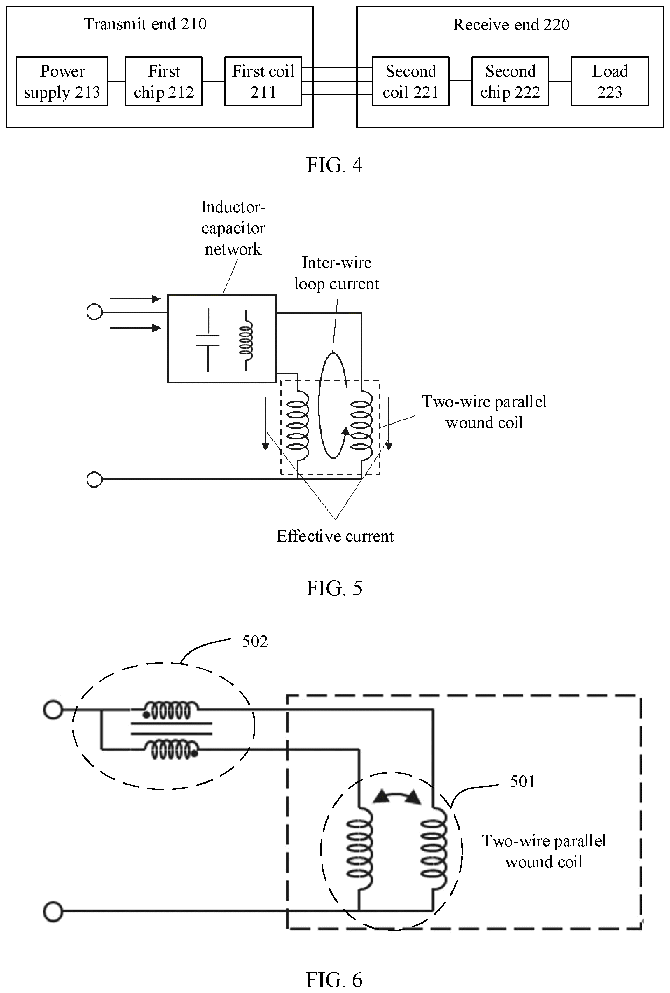

FIG. 4 is a diagram illustrating a wireless charging principle. As shown in FIG. 4, a wireless charging scenario involves a transmit end 210 (that is, a power supply device) and a receive end 220 (that is, a power receiving device). Both the transmit end 210 and the receive end 220 have a wireless charging capability, to implement a wireless charging process from the transmit end 210 to the receive end 220.

The transmit end 210 may include a first coil 211, a first chip 212, and a power supply 213. The receive end 220 may include a second coil 221, a second chip 222, and a load 223. The first coil 211 and the second coil 221 are configured to implement energy coupling. The first chip 212 and the second chip 222 are configured to implement wireless charging control or management. The power supply 213 and the load 223 are configured to store electrical energy.

After a wireless charging area of the transmit end 210 is aligned with a wireless charging area of the receive end 220, the transmit end 210 may wirelessly charge the receive end 220. Specifically, in the wireless charging process, the transmit end 210 may control, through the first chip 212, the power supply 213 to output a current to the first coil 211 (that is, a power output coil), so that the first coil 211 may transmit a high-frequency magnetic field, that is, convert an electrical signal into a magnetic signal. The high-frequency magnetic field may pass through the second coil 221 (that is, a power receiving coil), so that an induced current is generated on the second coil 221, that is, the magnetic signal is converted into an electrical signal. The second chip 222 may detect the induced current, and input the induced current into the load 223.

In some embodiments, the first chip 212 may include a voltage conversion module and a transmitting circuit. The voltage conversion module is configured to implement voltage conversion, and the transmitting circuit is configured to convert direct current power into an alternating current signal. Correspondingly, the first coil 211 is configured to convert the alternating current signal into a magnetic signal, and transmit the magnetic signal.

In some embodiments, the second chip 222 may include a voltage conversion module and a receiving circuit. The second coil 221 is configured to convert the magnetic signal into an alternating current signal, the receiving circuit is configured to convert the alternating current signal into direct current power, and the voltage conversion module is configured to implement voltage conversion.

In a wireless charging system, a multi-wire/bundle/strand parallel wound coil is used, so that a currentcarrying capability of the coil can be flexibly increased, thereby adapting to different application requirements. However, due to influence of a skin effect and a proximity effect under high-frequency operating conditions, values of currents in parallel wound wires are different, causing a Q value of the coil to be lower than that of a single-wire wound coil of the same size. This is not conducive to improving system efficiency.

A cause of current imbalance in the multi-wire parallel wound coil lies in differences in self-inductance and mutual inductance of sub-coils corresponding to the wires. In the conventional technology, the multiple wires are cross-wound once or multiple times to reduce the differences in self-inductance of the coils corresponding to the wires, thereby improving current balance among the wires. However, for a coil formed by winding Litz wires, a thickness at a crossing position increases. Therefore, a cross-wound coil is not applicable to a case in which a thickness is consistent with a diameter of a single wire. For a case in which crossing is required at designated positions, automated production is difficult to implement.

An embodiment of this application provides a wireless charging module 500, including a multi-wire parallel wound coil 501, where the multi-wire parallel wound coil 501 is formed by winding multiple wires side by side, a target structure 502 is connected between at least two wires in the multi-wire parallel wound coil 501, the target structure 502 is equivalent to a negatively coupled inductor, and the target structure is a structure formed by local structures of the two wires or a structure independent of the two wires.

The wireless charging module 500 provided in this embodiment of this application may be applied to a transmit end and/or a receive end.

Specifically, as shown in FIG. 5, FIG. 5 is a diagram illustrating a principle of suppressing a loop current in a two-wire parallel wound coil 501 by using an inductor-capacitor network. For the multi-wire parallel wound coil 501, a current may be split into an effective current and a loop current. Based on an approach of suppressing the loop current without impact on the effective current, in this embodiment of this application, an inductor-capacitor network is introduced in an inter-wire loop to increase a loop impedance formed between wires in the parallel wound coil 501, while an impedance of an effective current path of a non-loop current is not affected, so as to improve current balance among the wires in the multi-wire parallel wound coil 501 and reduce a loss of the multi-wire parallel wound coil 501.

In an embodiment of this application, a negatively coupled inductor may be connected in an inter-wire loop of the multi-wire parallel wound coil 501, to increase a loop impedance, thereby suppressing a loop current, and resolving problems of an additional loss and uneven heat distribution caused by presence of the loop current in the multi-wire parallel wound coil 501. Refer to FIG. 6. FIG. 6 illustrates a negatively coupled inductor equivalent to a target structure 502.

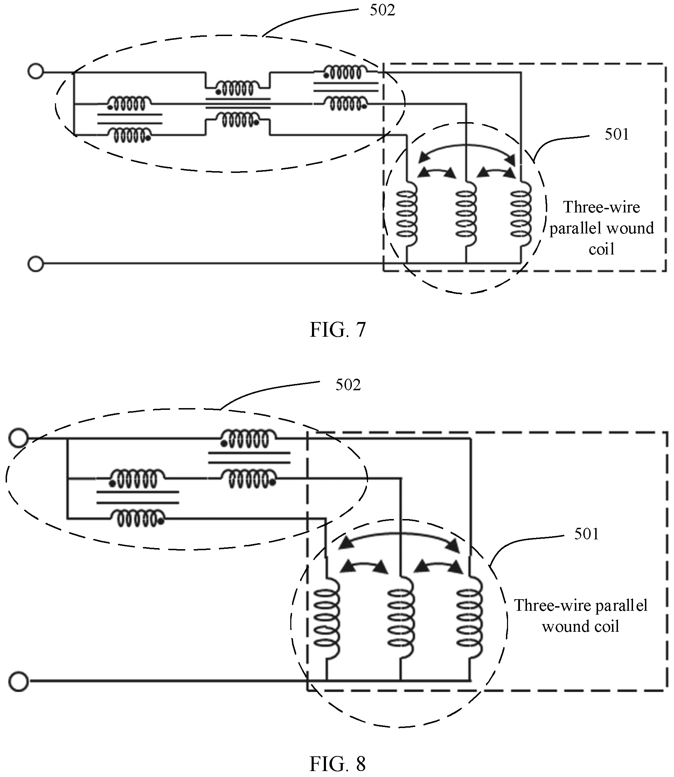

In a possible implementation, the target structure 502 is connected between each wire and at least one other wire in the multi-wire parallel wound coil 501. When the negatively coupled inductor has a sufficiently large inductance value, a good loop current suppression effect may be achieved by connecting at least one group of negatively coupled inductors between each wire and any other wire. In this case, only a minimum of N-1 groups of negatively coupled inductors are required (as shown in FIG. 8, a three-wire parallel wound coil 501 is connected to two groups of negatively coupled inductors), that is, there is no need to dispose a negatively coupled inductor between every two wires, thereby reducing costs.

In a possible implementation, the target structure 502 is connected between any two of the wires in the coil 501. In a most ideal case, one group of negatively coupled inductors is connected between any two wires, and the N-wire parallel wound coil 501 requires a total of N·(N-1)/2 groups of negatively coupled inductors (for example, as shown in FIG. 7, a three-wire parallel wound coil 501 is connected to three groups of negatively coupled inductors). In this case, the loop impedance can be maximized, and a better loop current suppression effect can be achieved.

The following describes several examples of a target structure 502 that can be equivalent to a negatively coupled inductor.
1. The negatively coupled inductor is implemented by using a magnetic ring 503 and reusing a lead-out end of the coil 501.

In other words, the magnetic ring 503 is additionally disposed as a magnetic core of the negatively coupled inductor, and a lead-out wire of the coil 501 is reused as a winding of the negatively coupled inductor.

In a possible implementation, the at least two wires include a first wire and a second wire; and the target structure 502 includes a magnetic ring 503, where lead-out ends on a same side of the first wire and the second wire are wound around the magnetic ring 503.

The magnetic ring 503 may also be referred to as a ring magnet, and a material of the magnetic ring 503 may be a soft magnetic material.

In some embodiments, the material of the magnetic ring 503 may be any one of the following materials:
(1) pure iron and low-carbon steel, with high saturation magnetization, a low price, and good processability;
(2) an iron-silicon alloy material, where after silicon is added to pure iron, a magnetic aging phenomenon of the magnetic material can be eliminated;
(3) an iron-aluminum alloy material, with relatively good soft magnetic properties, high magnetic permeability and resistivity, high hardness, and good wear resistance;
(4) an iron-silicon-aluminum alloy material, with relatively high hardness, saturation magnetic flux density, magnetic permeability, and resistivity;
(5) a nickel-iron alloy material, where magnetic properties can be controlled by adjusting alloying element composition and using an appropriate process, to obtain a soft magnetic material with high permeability, constant permeability, a square-loop property, and the like;
(6) an iron-cobalt alloy material, with relatively high saturation magnetization and low resistivity;
(7) a soft magnetic ferrite, which is a non-metallic ferromagnetic soft magnetic material with high resistivity, lower saturation magnetization than metal, and a low price;
(8) an amorphous soft magnetic alloy material, which is also referred to as metallic glass or amorphous metal, has high magnetic permeability and resistivity and low coercivity, is insensitive to stress, has no magnetocrystalline anisotropy caused by a crystal structure, and has characteristics such as corrosion resistance and high strength; and
(9) a nanocrystalline soft magnetic alloy material, which is generally composed of a crystalline phase less than about 50 nanometers and an amorphous grain boundary phase, is also referred to as a nanocrystalline material, and has characteristics of high magnetic permeability, low coercivity, a low iron loss, high saturation magnetic flux density, and good stability.

For example, the soft magnetic material used by the ring magnet may include at least one of iron (Fe), iron-nickel (FeNi), iron-silicon (FeSi), amorphous, and nanocrystalline materials.

In this embodiment of this application, the ring magnet is in a ring shape, that is, in a hollow closed shape. The ring magnet may be, for example, a circular ring, a square ring, an elliptical ring, or a triangular ring. A specific shape of the ring magnet is not limited in this embodiment of this application. In an actual application, the shape of the ring magnet may be set based on an actual situation. For ease of understanding, embodiments provided in this application are described by using an example in which the ring magnet is in a circular ring shape. However, it may be understood that this application is not limited thereto.

In a possible implementation, the negatively coupled inductor may be formed by the lead-out wire of the multi-wire parallel wound coil 501 and the magnetic ring 503. The first wire and the second wire in the multi-wire parallel wound coil 501 are used as an example. The lead-out ends on the same side of the first wire and the second wire may be wound around the magnetic ring 503 in opposite winding directions.

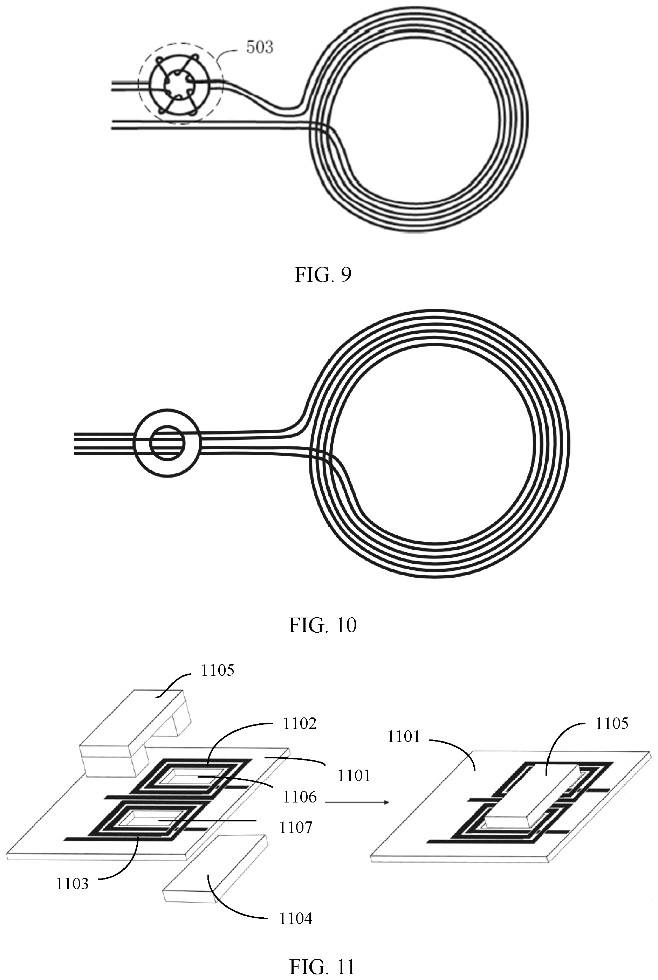

As shown in FIG. 9 and FIG. 10, FIG. 9 shows a two-wire parallel wound coil 501, where lead-out ends on one side of the two-wire parallel wound coil 501 are both wound around a same magnetic ring 503 in opposite winding directions, so that magnetic fields formed by effective currents in the magnetic ring can cancel each other, presenting almost no inductive reactance, while magnetic fields formed by inter-wire loop currents in the magnetic ring enhance each other, presenting a large inductive reactance. FIG. 10 shows a two-wire parallel wound coil 501, where lead-out ends on both sides of the two-wire parallel wound coil 501 are wound around a same magnetic ring 503, and two wires at a same end and two lead-out ends of a same wire are wound in opposite directions, so that magnetic fields formed by effective currents in the magnetic ring can cancel each other, presenting almost no inductive reactance, while magnetic fields formed by inter-wire loop currents in the magnetic ring enhance each other, presenting a large inductive reactance.

For the two-wire parallel wound coil 501, lead-out wires on one or two sides of the coil 501 may pass through the magnetic ring 503, thereby forming a required negatively coupled inductor. A quantity of magnetic rings 503 corresponds to a quantity of required groups of negatively coupled inductors, and at least N-1 magnetic rings 503 are required for N-wire parallel winding.

In the foregoing manner, the added negatively coupled inductor may be formed by a lead-out wire of the coil 501 and the magnetic ring 503, and the lead-out wire of the coil 501 is reused as a negatively coupled inductor winding, so that a negatively coupled inductor with a high Q value can be implemented at a low cost.

2. The negatively coupled inductor is implemented by using a PCB wire and reusing a magnetic core on the back of the coil.

In a possible implementation, the magnetic core on the back of the coil may be reused as a part of a magnetic core of the negatively coupled inductor, and a PCB wire (connected to the coil) is additionally disposed as a winding of the negatively coupled inductor.

In a possible implementation, the multi-wire parallel wound coil formed by the at least two wires includes a first wire and a second wire; and the target structure includes a circuit board substrate 1101 and a magnetic ring, where the circuit board substrate 1101 includes a first hole 1106, a second hole 1107, a first wire 1102 wound around the first hole 1106, and a second wire 1103 wound around the second hole 1107, the magnetic ring passes through the first hole 1106 and the second hole 1107, a lead-out end of the first wire is connected to the first wire 1102, and a lead-out end of the second wire is connected to the second wire 1103.

For example, the circuit board substrate is a PCB board. The circuit board substrate may be provided with the first hole 1106 and the second hole 1107. In one aspect, the winding of the negatively coupled inductor may be disposed on the circuit board substrate. The first wire and the second wire are used as an example. The lead-out end of the first wire and the lead-out end of the second wire (lead-out ends on a same side of the first wire and the second wire) may be respectively connected to two windings on the circuit board substrate (that is, windings formed by winding the first wire 1102 and the second wire 1103 respectively around the first hole 1106 and the second hole 1107). In another aspect, the first hole 1106 and the second hole 1107 may be used as magnetic core slots reserved on the PCB, and a magnetic ring used as the magnetic core of the negatively coupled inductor may pass through the first hole 1106 and the second hole 1107 provided in the circuit board substrate, so that the magnetic core of the negatively coupled inductor may be coupled to the two windings on the circuit board substrate to form the negatively coupled inductor.

In a possible implementation, the magnetic ring may be additionally disposed, that is, independent of the magnetic core on the back of the coil. To reduce costs, a magnetic core is provided on the back of the coil, and a magnetic core is also required for the negatively coupled inductor. Therefore, magnetic core of the coil and the negatively coupled inductor may be partially reused to improve overall integration and reduce a volume and costs. Therefore, the used magnetic ring may include a first magnetic core part 1104 and a C-shaped second magnetic core part 1105. For example, the first magnetic core part 1104 may be I-shaped, the first magnetic core part 1104 belongs to the magnetic core, and the second magnetic core part 1105 is snapped onto the first magnetic core part 1104 and passes through the first hole 1106 and the second hole 1107.

A structure shown in FIG. 11 includes a circuit board substrate 1101, a first wire 1102, a second wire 1103, a first magnetic core part 1104, and a second magnetic core part 1105. The circuit board substrate 1101 is provided with a first hole 1106 and a second hole 1107, the first wire 1102 is wound around the first hole 1106, and the second wire 1103 is wound around the second hole 1107. The left side of FIG. 11 illustrates a structure in which the first magnetic core part 1104 does not pass through the first hole 1106 and the second hole 1107 and does not snap onto the second magnetic core part 1105. The left side of FIG. 11 illustrates a structure in which the first magnetic core part 1104 passes through the first hole 1106 and the second hole 1107 and is snapped onto the second magnetic core part 1105.

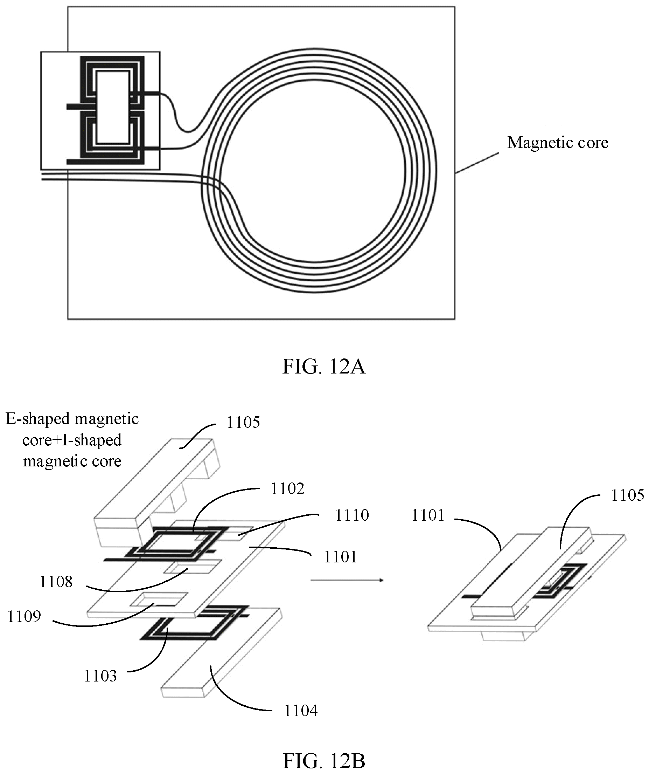

Refer to FIG. 12A. FIG. 12A illustrates a first magnetic core part 1104 that reuses the magnetic core on the back of the coil.

In addition, in a possible implementation, the second magnetic core part 1105 and the multi-wire parallel wound coil may be located on opposite sides of the magnetic core. In other words, the target structure 502 equivalent to the negatively coupled inductor may also be disposed on the back of the magnetic core of the coil, so that an overall structure can be more compact.

In a possible implementation, the at least two wires include a first wire and a second wire; and the target structure 502 includes a circuit board substrate 1101, a first magnetic core part 1104, and an E-shaped second magnetic core part 1105, where
the circuit board substrate includes a third hole 1108, a first wire 1102 wound around the third hole 1108, and a second wire 1103, where the first wire 1102 and the second wire 1103 are at different layers of the circuit board substrate 1101, a middle protrusion of the second magnetic core part 1105 passes through the third hole 1108, a lead-out end of the first wire is connected to the first wire 1102, a lead-out end of the second wire is connected to the second wire 1103, the first magnetic core part 1104 belongs to the magnetic core, and the second magnetic core part 1105 is snapped onto the first magnetic core part 1104 and passes through the third hole 1108.

In a possible implementation, the circuit board substrate further includes a fourth hole 1109 and a fifth hole 1110, and protrusions on two sides of the second magnetic core part 1105 respectively pass through the fourth hole 1109 and the fifth hole 1110. For example, refer to FIG. 12B. FIG. 12B illustrates a first magnetic core part 1104 that reuses the magnetic core on the back of the coil.

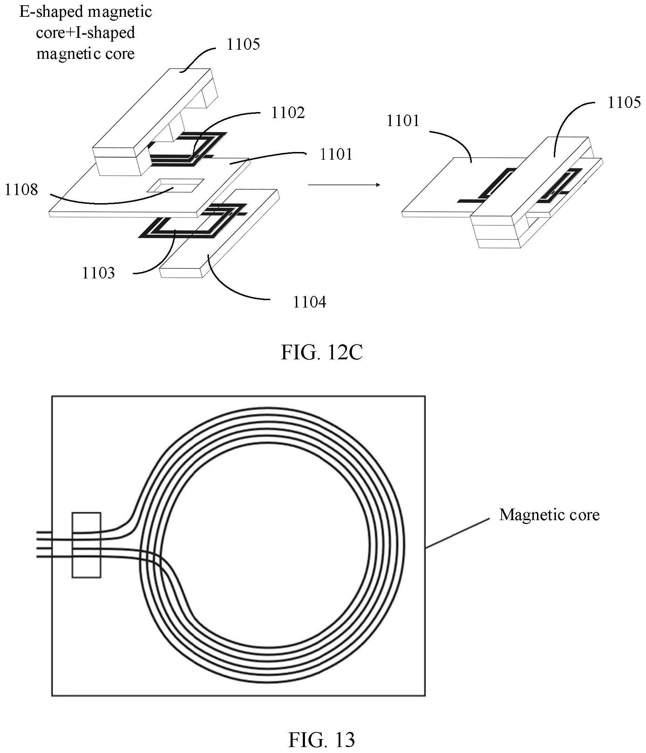

In a possible implementation, protrusions on two sides of the second magnetic core part 1105 pass through two sides of the circuit board substrate and snap onto the first magnetic core part 1104. Refer to FIG. 12C. FIG. 12C illustrates a first magnetic core part 1104 that reuses the magnetic core on the back of the coil.

The first magnetic core part 1104 and the second magnetic core part 1105 may be, but are not limited to, a C-shaped core combined with an I-shaped core, a C-shaped core combined with a C-shaped core, an E-shaped core combined with an I-shaped core, an E-shaped core combined with an E-shaped core, or a pot-shaped core. When a magnetic core such as an E-shaped core or a pot-shaped core is used, the first wire 1102 and the second wire 1103 may be wound around a same hole.

3. The negatively coupled inductor is implemented by reusing a lead-out end of the coil and reusing a magnetic core on the back of the coil.

In a possible implementation, the magnetic core on the back of the coil may be reused as a magnetic core of the negatively coupled inductor, and the lead-out end of the coil is reused as a winding of the negatively coupled inductor.

In a possible implementation, the multi-wire parallel wound coil formed by the at least two wires includes a first wire and a second wire; and the multi-wire parallel wound coil is attached to a magnetic core, where the target structure may be formed by using the following structure: the magnetic core is provided with a through hole 1301 at lead-out ends of the first wire and the second wire, the lead-out end of the first wire passes through the through hole 1301, and the lead-out end of the second wire does not pass through the through hole 1301.

When the magnetic core exists on the back of the coil and there is sufficient space, as shown in FIG. 13, the magnetic ring may be implemented by digging a hole in the magnetic core on the back of the coil, and the negatively coupled inductor is formed by winding the lead-out wire of the coil through a rear magnetic core slot. The added negatively coupled inductor may be directly constructed based on a coil module, and the negatively coupled inductor is integrated with the coil, thereby avoiding introduction of an additional component and helping reduce the costs and reduce the volume.

In addition, a quantity of holes and a manner in which the coil passes through the holes are not limited in this embodiment of this application. For example, in a possible implementation, the multi-wire parallel wound coil formed by the at least two wires includes a first wire and a second wire; and the multi-wire parallel wound coil is attached to a magnetic core, where the target structure may be formed by using the following structure: the magnetic core is provided with a plurality of through holes 1301 at lead-out ends of the first wire and the second wire, and the lead-out end of the first wire and the lead-out end of the second wire respectively pass through the plurality of through holes 1301 sequentially in opposite directions.

4. The negatively coupled inductor is implemented by reusing a lead-out end of the coil.

In a possible implementation, the negatively coupled inductor may be directly wound in the middle of the coil or on the back of the magnetic core.

In a possible implementation, the multi-wire parallel wound coil formed by the at least two wires includes a first wire and a second wire, the first wire includes a first wire segment 1401, the second wire includes a second wire segment 1402, the first wire segment 1401 and the second wire segment 1402 are adjacent and arranged side by side, and effective current directions on the first wire segment 1401 and the second wire segment 1402 are opposite.

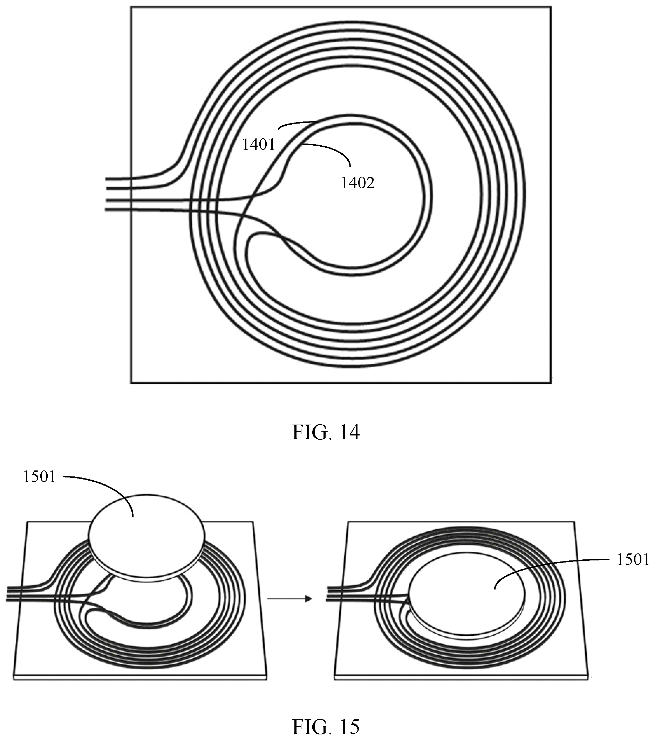

For example, for a multi-wire parallel wound coil with a rear magnetic core, when there is sufficient space in the middle of the coil or on the back of the magnetic core, a negatively coupled inductor may be directly wound in the middle of the coil or on the back of the magnetic core. Refer to FIG. 14. FIG. 14 is a diagram of a structure in which a negatively coupled inductor is directly wound in the middle of a two-wire parallel wound coil.

In a possible implementation, on the first magnetic core, an area in which the first wire segment 1401 and the second wire segment 1402 are located is covered with a second magnetic core 1501. In other words, the negatively coupled inductor may be further covered with a magnetic core to increase an inductance value. Refer to FIG. 15. FIG. 15 is a diagram of a structure in which a negatively coupled inductor wound on a surface of a magnetic core is covered with a magnetic core to increase an inductance value of the negatively coupled inductor.

In addition, an embodiment of this application further provides a wireless charging module, including a multi-wire parallel wound coil, where the multi-wire parallel wound coil is formed by winding multiple wires side by side, where a capacitor is connected in series to each wire in the multi-wire parallel wound coil, a compensation inductor is connected in series to a main circuit formed after the multi-wire parallel wound coil is connected, and a product of an inductance value of the compensation inductor and a total capacitance value of capacitors connected in series to the wires in the multi-wire parallel wound coil is related to an operating frequency or a resonant compensation frequency of the coil.

In a possible implementation, the product of the inductance value of the compensation inductor and the total capacitance value of the capacitors connected in series to the wires in the multi-wire parallel wound coil is 1/(ω²), where ω is an operating frequency or a resonant compensation angular frequency.

In a possible implementation, capacitance values of capacitors connected in series to different wires are equal (for example, when a loop current on each loop is equal, the capacitance values of the capacitors connected in series to different wires may be set to be equal, so as to improve a suppression effect on the loop current).

In an embodiment of this application, a loop current is suppressed by increasing a capacitive reactance of an inter-wire loop. As shown in FIG. 16, each wire of the multi-wire parallel wound coil is connected in series to a capacitor, so that a large capacitive reactance is introduced in any inter-wire loop, and an inter-wire loop current is reduced. Because the capacitors connected in series are also equivalent to a capacitor whose capacitance value is a total capacitance value C (C=C1+C2+...+Cn) connected in series in an effective current loop, to avoid or reduce impact on an impedance characteristic of the effective current loop, a compensation inductor L may be connected in series to the main circuit for compensation, and an inductance value of the compensation inductor and the total capacitance value of the capacitors connected in series satisfy L=1/(ω²·C). When the operating frequency is fixed, ω may be the operating angular frequency or the resonant compensation angular frequency of the coil; or when the operating frequency is not fixed, ω may be the resonant compensation angular frequency of the coil.

In addition, loop current suppression may be considered as being related to a value of a loop impedance and irrelevant to a sign. Therefore, when the same impedance value is maintained, an inductor may be replaced with a capacitor, or a capacitor may be replaced with an inductor, and the loop current suppression characteristic remains substantially unchanged. When a capacitor is replaced with an inductor, an inductance value of a compensation capacitor and inductance values of inductors connected in series may satisfy 1/L1+1/L2+...+1/Ln=ω²·C, where C is the compensation capacitor.

In the foregoing manner, in the multi-wire parallel wound coil, a capacitor is connected in series to each wire to increase the capacitive reactance of the loop in the multi-wire parallel wound coil, and an inductor is connected in series to a main loop to offset impact of the series capacitors on an effective current. Because the capacitors have advantages of small volumes and low costs, problems of a loop current loss and uneven heat distribution of the multi-wire parallel wound coil can be improved at extremely low costs in terms of volume and cost.

In an application scenario in which a series compensation capacitor exists in the main loop, the compensation inductor L may partially or completely cancel the compensation capacitor. Particularly, when a total capacitance value of loop current suppression capacitors is equal to a capacitance value of the series compensation capacitor, a reactance of the compensation inductor L completely cancels a reactance of the compensation capacitor, and no series compensation inductor or compensation capacitor is required in the main loop. In this case, the circuit is simplified as shown in FIG. 17. FIG. 17 is a circuit diagram illustrating a principle of suppressing an inter-wire loop current by connecting capacitors in series to an N-wire parallel wound coil when a total capacitance value of loop current suppression capacitors is equal to a capacitance value of a compensation capacitor. This is equivalent to directly using the compensation capacitor to suppress the loop current, without requiring an additional component, thereby reducing costs.

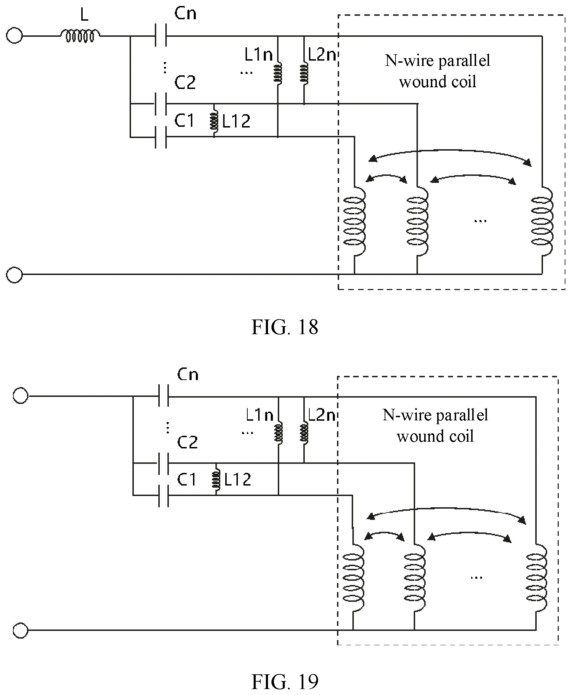

In a possible implementation, to further enhance a suppression effect on the inter-wire loop current, in addition to connecting the capacitors in series to different wires, inductors with a same inductance value may be connected between different wires, to construct an LC band-stop network. Refer to FIG. 18. FIG. 18 is a circuit diagram illustrating a principle of suppressing an inter-wire loop current by using an LC band-stop network. An additional inductor may be connected between any two wires of an N-wire parallel wound coil, so that inductors and loop current suppression capacitors constitute the LC band-stop network. To prevent the newly introduced inductors from interfering with an effective current loop, C1=C2=...=Cn=C0 needs to be satisfied. When an expected center frequency of the band-stop network is ω0, L12=...=L1n=...=Lmn=N/(ω0²·C0). It should be understood that loop current suppression may be considered as being related to a value of a loop impedance and irrelevant to a sign. Therefore, when the same impedance value is maintained, an inductor may be replaced with a capacitor, or a capacitor may be replaced with an inductor, and the loop current suppression characteristic remains substantially unchanged.

In a wireless power transmission system using a multi-wire parallel wound coil, an LC band-stop network is constructed. Because a band-stop network is constructed in a loop formed between wires in the multi-wire parallel wound coil, inter-wire loop current suppression is implemented without impact on an impedance of an effective current loop. The band-stop network constructed in the loop presents a high impedance within a band-stop frequency range. When the band-stop frequency matches an operating frequency, a loop current in the multi-wire parallel wound coil can be effectively suppressed. In addition, a capacitor in the band-stop network may be reused with a series compensation capacitor, thereby properly suppressing a loop current loss in the multi-wire parallel wound coil at a relatively low cost.

It should be understood that, in a possible implementation, in an application scenario in which a series compensation capacitor exists in a main loop, a compensation inductor L may partially or completely cancel a compensation capacitor. When a total capacitance value of loop current suppression capacitors is equal to a capacitance value of the series compensation capacitor, a reactance of the compensation inductor L completely cancels a reactance of the compensation capacitor, and no series compensation inductor or compensation capacitor is required in the main loop. In this case, the circuit is simplified as shown in FIG. 19. This is equivalent to directly using the compensation capacitor to suppress a loop current, without requiring an additional component, thereby providing a favorable cost advantage.

The wireless charging module provided in embodiments of this application may be applied to a charging device, a vehicle, or a portable electronic device, and is used as a receive end or a transmit end of electrical energy.

The vehicle is used as an example. With popularization of vehicles, cars and the like have become an indispensable transportation means in daily life of people. However, development cycles of the vehicles are long, and update and iteration are slow, which cannot meet diversified and personalized requirements of consumers. Consumer electronic products such as mobile phones and watches are convenient for the consumers to carry. The products can adapt to fast-changing scenario requirements due to advantages of the products, that is, short life cycles and fast update and iteration. Therefore, it is imperative to ecologically integrate the consumer electronics industry and the automobile industry. In embodiments of this application, the wireless charging module may be applied to a vehicle, to facilitate practice of putting consumer electronic products into the vehicle.

In some embodiments, the wireless charging module provided in embodiments of this application may be disposed at at least one of a control console, a seat back, a door armrest, a central armrest, a door trim, and a trunk of the vehicle, so that a user can conveniently charge an in-vehicle ecological device by using the wireless charging module. In embodiments of this application, when the wireless charging module is disposed in a vehicle, the wireless charging module may be electrically connected to a power supply circuit in the vehicle, and an energy source of the wireless charging module is the vehicle. In other words, the wireless charging module obtains energy from the power supply circuit of the vehicle and may wirelessly charge another device.

In some embodiments, the wireless charging module provided in embodiments of this application may be fixedly installed in the vehicle as a pre-installed component. In other words, before the entire vehicle is delivered from a factory, the wireless charging module is built in the vehicle as a pre-installed accessory. In this way, the vehicle can charge the in-vehicle ecological device without using an exposed wire or a charging interface, which can improve aesthetics and help meet personalized and diversified scenario requirements of the user.

In some other embodiments, the wireless charging module provided in embodiments of this application is installed in the vehicle by using a detachable connection structure. For example, the wireless charging module is installed in the vehicle by using a claw, a buckle, a thread, a hook-and-loop fastener, or the like. In this way, it can be convenient for the user to charge the in-vehicle ecological device at different positions in the vehicle by using the wireless charging module. In some embodiments, the wireless charging module may be electrically connected to a charging interface on the vehicle through a charging connector, or may be electrically connected to a charging interface through a contact point.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless charging module, comprising a multi-wire parallel wound coil 501, wherein the multi-wire parallel wound coil 501 is formed by winding multiple wires side by side, wherein
a target structure 502 is connected between at least two wires in the multi-wire parallel wound coil 501, the target structure 502 is equivalent to a negatively coupled inductor, and the target structure 502 is a structure formed by local structures of the two wires or a structure independent of the two wires.

2. The wireless charging module according to claim 1, wherein the target structure 502 is connected between each of the at least two wires and at least one other wire.

3. The wireless charging module according to claim 1 or 2, wherein the target structure 502 is connected between any two of the wires.

4. The wireless charging module according to any one of claims 1 to 3, wherein the at least two wires comprise a first wire and a second wire; and the target structure 502 comprises a magnetic ring 503, wherein lead-out ends on a same side of the first wire and the second wire are wound around the magnetic ring 503 in opposite winding directions.

5. The wireless charging module according to any one of claims 1 to 3, wherein the at least two wires comprise a first wire and a second wire; and the target structure 502 comprises a circuit board substrate 1101 and a magnetic ring, wherein the circuit board substrate 1101 comprises a first hole 1106, a second hole 1107, a first wire 1102 wound around the first hole 1106, and a second wire 1103 wound around the second hole 1107, the magnetic ring passes through the first hole 1106 and the second hole 1107, a lead-out end of the first wire is connected to the first wire 1102, and a lead-out end of the second wire is connected to the second wire 1103.

6. The wireless charging module according to claim 5, wherein the multi-wire parallel wound coil 501 is attached to a magnetic core, wherein
the magnetic ring comprises a first magnetic core part 1104 and a C-shaped second magnetic core part 1105, the first magnetic core part 1104 belongs to the magnetic core, and the second magnetic core part 1105 is snapped onto the first magnetic core part 1104 and passes through the first hole 1106 and the second hole 1107.

7. The wireless charging module according to any one of claims 1 to 3, wherein the at least two wires comprise a first wire and a second wire; and the target structure 502 comprises a circuit board substrate 1101, a first magnetic core part 1104, and an E-shaped second magnetic core part 1105, wherein
the circuit board substrate comprises a third hole 1108, a first wire 1102 wound around the third hole 1108, and a second wire 1103, wherein the first wire 1102 and the second wire 1103 are at different layers of the circuit board substrate 1101, a middle protrusion of the second magnetic core part 1105 passes through the third hole 1108, a lead-out end of the first wire is connected to the first wire 1102, a lead-out end of the second wire is connected to the second wire 1103, the first magnetic core part 1104 belongs to the magnetic core, and the second magnetic core part 1105 is snapped onto the first magnetic core part 1104 and passes through the third hole 1108.

8. The wireless charging module according to claim 7, wherein the circuit board substrate further comprises a fourth hole 1109 and a fifth hole 1110, and protrusions on two sides of the second magnetic core part 1105 respectively pass through the fourth hole 1109 and the fifth hole 1110.

9. The wireless charging module according to claim 7, wherein protrusions on two sides of the second magnetic core part 1105 pass through two sides of the circuit board substrate and snap onto the first magnetic core part 1104.

10. The wireless charging module according to claim 5 or 6, wherein the second magnetic core part 1105 and the multi-wire parallel wound coil 501 are located on opposite sides of the magnetic core.

11. The wireless charging module according to any one of claims 1 to 3, wherein the at least two wires comprise a first wire and a second wire; and the multi-wire parallel wound coil 501 is attached to a magnetic core, wherein the target structure 502 is formed by using the following structure:
the magnetic core is provided with a through hole 1301 at lead-out ends of the first wire and the second wire, the lead-out end of the first wire passes through the through hole 1301, and the lead-out end of the second wire does not pass through the through hole 1301; or
the magnetic core is provided with a plurality of through holes 1301 at lead-out ends of the first wire and the second wire, and the lead-out end of the first wire and the lead-out end of the second wire respectively pass through the plurality of through holes 1301 sequentially in opposite directions.

12. The wireless charging module according to any one of claims 1 to 3, wherein the at least two wires comprise a first wire and a second wire, the first wire comprises a first wire segment 1401, the second wire comprises a second wire segment 1402, the first wire segment 1401 and the second wire segment 1402 are adjacent and arranged side by side, and effective current directions on the first wire segment 1401 and the second wire segment 1402 are opposite.

13. The wireless charging module according to claim 12, wherein the multi-wire parallel wound coil 501 is attached to a first magnetic core; and on the first magnetic core, an area in which the first wire segment 1401 and the second wire segment 1402 are located is covered with a second magnetic core 1501.

14. A wireless charging module, comprising a multi-wire parallel wound coil 501, wherein the multi-wire parallel wound coil 501 is formed by winding multiple wires side by side, wherein
a capacitor is connected in series to each wire in the multi-wire parallel wound coil 501, a compensation inductor is connected in series to a main circuit formed after the multi-wire parallel wound coil 501 is connected, and a product of an inductance value of the compensation inductor and a total capacitance value of capacitors connected in series to different wires in the multi-wire parallel wound coil 501 is related to an operating frequency or a resonant compensation frequency of the coil.

15. The wireless charging module according to claim 14, wherein capacitance values of the capacitors connected in series to different wires are equal.

16. The wireless charging module according to claim 14 or 15, wherein the product of the inductance value of the compensation inductor and the total capacitance value of the capacitors connected in series on the multi-wire parallel wound coil 501 is 1/(ω²), wherein when the operating frequency is fixed, ω is an operating angular frequency or a resonant compensation angular frequency of the coil; or when the operating frequency is not fixed, ω is a resonant compensation angular frequency of the coil.

17. The wireless charging module according to claim 15 or 16, wherein an inductor is connected between different wires.

18. A wireless charging module, comprising a multi-wire parallel wound coil 501, wherein the multi-wire parallel wound coil 501 is formed by winding multiple wires side by side, wherein
an inductor is connected in series to each wire in the multi-wire parallel wound coil 501, a compensation capacitor is connected in series to a main circuit formed after the multi-wire parallel wound coil 501 is connected, and a value relationship between a capacitance value of the compensation capacitor and inductors connected in series to different wires in the multi-wire parallel wound coil 501 is related to an operating frequency or a resonant compensation frequency of the coil.

19. The wireless charging module according to claim 18, wherein inductance values of the inductors connected in series to different wires are equal.

20. The wireless charging module according to claim 18 or 19, wherein the value relationship between the capacitance value of the compensation capacitor and the inductors connected in series on the multi-wire parallel wound coil 501 is: 1/L1+1/L2+...+1/Ln=(ω²·C), wherein L1, L2, and Ln are inductors, C is the capacitance value of the compensation capacitor, and · is multiplication; and when the operating frequency is fixed, ω is an operating angular frequency or a resonant compensation angular frequency of the coil; or when the operating frequency is not fixed, ω is a resonant compensation angular frequency of the coil.

21. The wireless charging module according to claim 19 or 20, wherein a capacitor is connected between different wires.

22. A wireless charging device, comprising the wireless charging module according to any one of claims 1 to 21 and an energy storage device, wherein the wireless charging module is configured to serve as a wireless charging receive end; and
the multi-wire parallel wound coil 501 comprised in the wireless charging module is configured to receive electrical energy, and transmit the electrical energy to the energy storage device.

23. A wireless charging device, comprising the wireless charging module according to any one of claims 1 to 21, wherein the wireless charging module is configured to serve as a wireless charging transmit end; and
the multi-wire parallel wound coil 501 comprised in the wireless charging module is configured to propagate electrical energy to an externally coupled coil by using a magnetic field.

24. A charging system, comprising the wireless charging device according to claim 22 and the wireless charging device according to claim 23.
